(19) **Europäisches Patentamt European Patent Office Office européen des brevets**

(11) **EP 4 600 906 A1**

(12) **EUROPEAN PATENT APPLICATION**

(43) Date of publication:
**13.08.2025 Bulletin 2025/33**

(21) Application number: **25154892.1**

(22) Date of filing: **30.01.2025**

(51) International Patent Classification (IPC):
**G06T 11/00** (2006.01)

(52) Cooperative Patent Classification (CPC):
**G06T 11/006;** G06T 2211/424; G06T 2211/436

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2024 US 202463550077 P**

(71) Applicant: **Carl Zeiss X-Ray Microscopy, Inc. Dublin, California 94568 (US)**

(72) Inventors:
• **Case, Thomas A.**
  **Dublin, 94568 (US)**
• **Xu, Shiqi**
  **Dublin, 94568 (US)**

(74) Representative: **Gulde & Partner**
  **Patent- und Rechtsanwaltskanzlei mbB**
  **Berliner Freiheit 2**
  **10785 Berlin (DE)**

(54) **SPATIALLY VARYING ARTIFACT REMOVAL METHOD FOR COMPUTED TOMOGRAPHY**

(57) A method for removing spatially varying artifacts such laminographic artifacts and/or high-angle cone beam artifacts for 3D computed tomography (CT) involves thresholding current reconstructions to create thresholded reconstructions and then creating simulated reconstructions from the thresholded reconstructions. These simulated reconstructions are subtracted from the current reconstructions to create the current reconstructions for a next iteration. A final reconstruction is then created by summing the thresholded reconstructions. This approach can progressively remove the artifacts. In addition, the method can be used to generate high quality training data to further improve the speed and robustness. These methods will work for other non-Orlov complete computed tomography in general, such as high cone angle, missing views.

Fig. 3A

**Description**

BACKGROUND OF THE INVENTION

X-ray micro tomography systems provide high-resolution, non-destructive imaging of internal structures in samples. The systems are utilized in a variety of industrial and research applications, such as semiconductor device fabrication, mining, manufacturing, materials science, clinical research, and failure analysis, as examples. The systems provide the ability to visualize features in samples without the need to cut and slice the samples.

X-ray micro tomography systems include X-ray projection systems that produce projection data of the sample and computer systems that reconstruct tomographic volumes of the sample from the projection data. In operation, the X-ray projection system executes a scan of a sample at different angles to produce the projection data. During a scan, X-rays are directed to the sample, and are absorbed or scattered by the sample as the X-rays travel through the sample. The X-rays not absorbed or scattered away are transmitted through and modulated by the sample. A detector system receives the transmitted X-rays, and creates a pixelated image with digitized pixel values, of the received X-rays. The series of X-ray projections at different angles produced from the scan form the projection data of the sample. Then, the computer system accesses the projection data, and applies reconstruction algorithms to the projection data to reconstruct volume datasets of the sample. These volume datasets are three dimensional (3D) representations of the sample, and a slice is a two dimensional (2D) cross-sectional image of the sample based on the volume dataset.

The most commonly used reconstruction algorithms fall into a class of reconstruction techniques termed analytical reconstruction. The objective is to find a closed-form solution to the problem of reconstructing an object's internal structure from its projections. The most common analytical method is filtered back projection (FBP). The projections are first processed using a high-pass filter, usually a ramp filter, in the frequency or space domain. Then, each filtered projection is "smeared" back onto the imaging plane as if each data point emits back uniformly in the shape of the original beam. These back projections from all angles are summed up to produce the reconstructed volume, which approximates the object's internal structure. The filtering and back projection operations collectively help in obtaining a more accurate and less blurred reconstruction of the original object. One type of filtered back projection is FDK reconstruction algorithm. See Feldkamp, Lee A., Lloyd C. Davis, and James W. Kress. "Practical cone-beam algorithm." Josa a 1.6 (1984): 612-619. It is used often with X-ray micro tomography systems since it reduces artifacts associated with the typical cone-shaped beam. However, such algorithms typically assume the imaging geometry satisfies Tuy's condition, which states that every plane (inside the 3D region of interest that is to be reconstructed) intersecting the object must contain at least one vertex point. See Feldkamp, L.A., Davis, L.C. and Kress, J.W. (1984) Practical Cone-Beam Algorithm. Journal of the Optical Society of America A, 1, 612-619.

Performing tomographic reconstruction in a laminographic setup comes with some unique challenges compared to traditional computed tomography. Laminography involves capturing X-ray images at a limited range of angles around a specific plane or axis within an object. Unlike conventional CT, laminography often has a restricted angle range. Tomographic laminography often rotates sample 360 degree. However, the beam line is no longer perpendicular to the rotational axis (RA). This limited angle data results in incomplete information, making it more challenging to achieve high-quality 3D reconstructions. Specifically, the limited-angle data can lead to artifacts in the reconstructed images, such as streaking or blurring. These artifacts can obscure details and affect the accuracy of the reconstructed volume. Specialized reconstruction algorithms are often required to mitigate these artifacts.

More specifically, to image large, flat objects, it is often beneficial to use a non-Tuy's or Orlov's condition (in parallel beam cases) complete computed tomography geometry. See Tuy, Heang K. "An inversion formula for cone-beam reconstruction." SIAM Journal on Applied Mathematics 43.3 (1983): 546-552; Orlov, S. S. "Theory of three-dimensional image reconstruction: I Conditions for a complete set of projections." Sov. Phys. Crystallogr. 20 (1976): 312-314. Tuy's sufficiency conditions for CT (both parallel beam and cone beam) reconstruction are that every plane (inside the 3D region of interest that to be reconstructed) intersecting the object must contain at least one vertex point. It is widely used to determine whether an image geometry can provide a good reconstruction for every voxel in theory. The work is demonstrated for cone beam but should definitely work for parallel beam as well (in low cone angle case, cone beam becomes parallel beam). Some non Tuy condition complete examples are (1) laminography (2) normal CT scan but with high cone beam angle (e.g., move both source and detector very close to the sample, with a detector that has a large field of view - therefore, the angle of the ray that connects source and edge/corner of detector will be very steep). Laminographic geometry increases signal-to-noise ratio which gives better throughput. These geometries make the inverse reconstruction problem more ill-posed. Noticeable artifacts can correspondingly appear in the reconstructed tomography.

Different approaches have been proposed to remove the artifacts arising from the laminographic geometry and from other similar under-determined set-ups. One approach employs machine learning to remove noise in reconstructions.

SUMMARY OF THE INVENTION

Nevertheless, many of the artifact removal approaches cannot remove structured or correlated artifacts, such as laminographic artifacts, and high-angle cone beam artifacts more generally. In fact, the laminographic artifacts are notoriously hard to remove due to the spatially varying structure. While there are spatially varying artifact removal methods, both data-driven and constrained optimization based, these methods either heavily rely on careful supervision that 1) only works for similar objects that have predictable shapes or 2) requires a priori knowledge of spatial distribution of the object. As a matter of fact, so far, there appears to be no unbiased spatially varying structured artifact removal methods for 3D computed tomography.

The present invention concerns a method to remove or mitigate spatially varying artifacts such laminographic artifacts and/or high-angle cone beam artifacts for 3D computed tomography (CT). In normal cone beam tomographies, the top and bottoms of the scan are affected exactly like in laminography and exhibit similar artifacts.

It can employ an unbiased approach that progressively removes the artifacts. In addition, the method can be used to generate high quality training data to further improve the speed and robustness of the artifact removal or mitigation. These methods will further work for other non-Orlov complete computed tomography setup in general, such as high cone angle, missing views, or the like.

For example, in the case of rotational laminography used to scan wafers or chips, it is mathematically impossible to completely reconstruct tomographic volumes of arbitrary objects from the projections within the plane since the exact sideways views are missing, breaking the Orlov and Tuy rules. However, isolated objects can still be recovered in the following way by performing FDK reconstructions which show approximately where the objects are located. In a first step, the brightest parts of the reconstruction (i.e., a first main first reconstruction) are found. These indicate there is a real (but distorted) object at that location. A threshold is then set just below that brightness and the thresholded tip of the object is taken. In other words, any parts of the reconstruction with brightness below said threshold are omitted and only the parts of the reconstruction with brightness above said threshold from said thresholded tip. This little tip is added to a new sum tomography, i.e., a sum tomography created without using said threshold, showing where this brightest part is. This bright object is forward projected to see what the views of just this object would be. Those views are back projected through FDK and it paints an exact image of all the artifacts one would get for a bright object at this location. This reconstruction is then subtracted from the main first reconstruction and the small bright object and its artifacts will now be removed together. After these steps, the whole first reconstruction is now reduced by some amount, such as 10% as a specific example (i.e., the top 10% of bright spots are removed from the first reconstruction). The top 10% of bright spots are now in a different sum buffer and the 10% of the artifacts and tails are removed from the entire volume. Now the reduced tomography exists and it has the next set of bright spots to threshold but these spots are sitting on less artifacts from the previous bigger bright spots. The image is repeatedly disassembled in this way, yielding a fairly self-correcting process.

In general, according to one aspect, the invention features a method for reconstruction of tomographic volumes of a sample from projection data. The method comprises thresholding current reconstructions to create thresholded reconstructions and then creating simulated reconstructions from the thresholded reconstructions. The thresholded reconstructions are preferably created by applying a threshold to the current reconstruction. These simulated reconstructions are subtracted from the current reconstructions to create the current reconstructions for a next iteration (next reconstruction). A final reconstruction is then created by summing the thresholded reconstructions, preferably by summing the thresholded reconstructions for all iterations performed in the course of the method. Preferably the iterations are performed, until a stopping criterion is met, wherein such stopping criterion could be that a predefined threshold is reached.

The method can further include training a neural network based on the reconstructions.

Preferably, the thresholds are set based on a range of an initial reconstruction and then the current reconstructions can be thresholded by zeroing values below thresholds in order to create the thresholded reconstructions. In other words, the current reconstructions can be thresholded by zeroing values below respective thresholds, i.e., for each current reconstruction there is a respective threshold that is used for thresholding said current reconstruction. This implements the assumption that the highest values (e.g., intensity or brightness values) of the current reconstructions are indeed signals; i.e., the brightest pixels are most likely related to real objects and thus the artifacts caused by the largest "signals" are removed. In other words, the implementation is based on that the highest values being signals are used to forward project and back project in order to create artificial artifacts that are subsequently subtracted from the current projection to create an artifact-subtracted projection.

The simulated reconstructions can be created by forward projecting and back projecting from the thresholded reconstructions.

Thus, spatially varying artifacts such laminographic artifacts and/or high-angle cone beam artifacts can be removed or at least mitigated.

In general, according to another aspect, the invention features a computer-implemented method for improving the reconstruction of tomographic volumes from projection data. The method includes thresholding current reconstructions to create thresholded reconstructions (wherein the thresholded reconstructions are preferably created by applying a threshold to the current reconstruction), creating simulated reconstructions from the thresholded reconstructions, subtracting the simulated reconstructions from the current reconstructions to create updated current reconstructions for a subsequent iteration, and summing the thresholded reconstructions to form a final reconstruction. By iteratively refining the reconstruction data in this manner, spatially varying artifacts can be diminished or removed, resulting in clearer and more accurate volumetric images.

In some implementations, the thresholding of current reconstructions involves selecting a plurality of threshold values based on a range of absorption values determined from an initial reconstruction of the projection data. This approach recognizes that the most significant signals are generally located in the upper range of absorption values, and therefore applying tiered or multiple thresholds can facilitate isolating these signals more effectively. Iteratively applying these thresholds and removing associated artifacts helps ensure that significant features are retained, while lower-level noise or artifact signals are progressively reduced in each subsequent iteration.

In further examples, creating the simulated reconstructions may be achieved through forward projection of each thresholded reconstruction to generate simulated projection data, which is then back projected to form the simulated reconstructions. By emulating the underlying imaging geometry in both forward- and back-projection steps, these simulated reconstructions accurately capture the artifacts introduced by the sample geometry and scan trajectory. Subtracting these simulated artifacts from the current reconstructions reduces the artifact content in the final result without assuming prior knowledge of the sample's geometry or composition.

In certain preferred embodiments, negative density values (or intensity / brightness values) may appear in the updated current reconstructions (next reconstruction) following the subtraction step, which can create unphysical representations in the volumetric image. To address this, the method optionally includes correcting these negative density values to ensure physically meaningful density distributions, for instance by resetting them to zero or by applying an adaptive correction based on expected material properties. This correction step helps preserve the integrity of the resulting volume data and avoids misleading interpretations of structural features.

Moreover, the projection data employed in this method can be generated under a laminographic or high cone-beam imaging geometry, which often suffers from missing views or incomplete coverage as described by non-Orlov-complete criteria. The described thresholding and iterative subtraction technique thus compensates for these geometrical limitations, significantly reducing spatially varying artifacts that are characteristic of such acquisition setups. By iteratively removing artifacts introduced by limited-angle or non-standard geometries, the method provides more reliable reconstructions for subsequent visualization or quantitative analysis.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:

Fig. 1 is a schematic diagram of an X-ray micro tomography system to which the methods of the present invention are applicable;
Fig. 2A is a schematic perspective view showing for a laminographic setup according to one embodiment;
Fig. 2B shows the reconstruction of the sample, specifically a Double Data Rate Synchronous Dynamic Random-Access Memory (DDR4) chip, from scans with Orlov complete geometry, as reference, showing the notorious butterfly artifact that plagues rotational laminography; these cannot be removed by a simple deconvolution as the artifacts are different for every part of the sample as shown by the various angles marked in the figure; also these artifacts can stretch across the entire volume and do not respond to typical deconvolution methods;
Figs. 2D and 2E show reconstructions of the sample employing the principles of the present invention to reduce those spatially varying artifacts shown in Fig. 2C;
Fig. 3A is a flow diagram employing a progressive approach to artifact removal according to the invention;
Fig. 3B is a flow diagram showing the training and use of a convolutional neural network (CNN) according to the invention; and
Figs. 4A-4D show different reconstructions associated with the described methods.

DETAILED DESCRIPTION OF THE PREFERRED EMBODIMENTS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

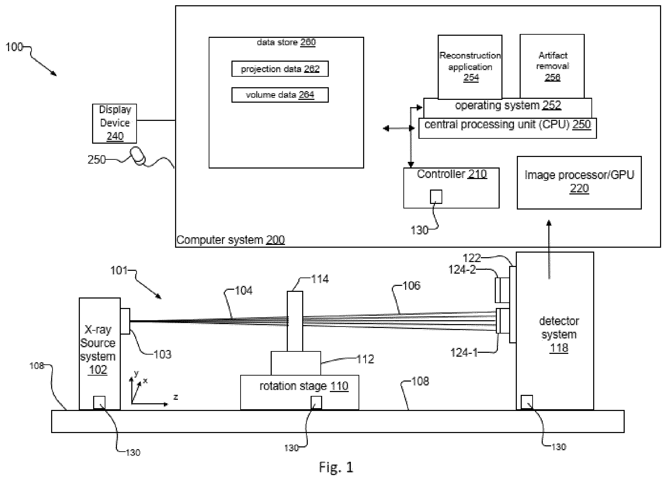

Fig. 1 is a schematic diagram of an X-ray micro tomography system 100 to which the methods and workflows of the present invention are applicable.

In general, the X-ray micro tomography system 100 combines an X-ray microscopy system 101 and a computer system 200 for receiving projections and calculating volume datasets from those projections.

The X-ray microscopy system 100 includes the X-ray source system 102 that generates a typically polychromatic X-ray beam 104 and a rotation stage 110 with sample holder 112 for holding and rotating the sample 114 in the X-ray beam 104 from the X-ray source system 102. Images or X-ray projections are captured by the detector system 118. The X-ray source system 102, the rotation stage 110, and the detector system 118 are mounted to a base 108 of the X-ray CT system 100. A computer system 200 typically receives and processes these projections and provides general control of the system 100. The computer system 200 or other computer will typically perform tomographic reconstruction using the X-ray projections to create volume datasets.

The X-ray source 102, in one example, is a cone beam, polychromatic X-ray source. The polychromatic X-ray source is preferably a laboratory X-ray source because of its ubiquity and relatively low cost. Nonetheless, synchrotron sources or accelerator-based sources are other alternatives.

Common laboratory X-ray sources include an X-ray tube, in which electrons are accelerated in a vacuum by an electric field and shot into a target piece of metal, with X-rays being emitted as the electrons decelerate in the metal.

In one example, the X-ray source 102 is a rotating anode reflective target type or micro-focused source, with a Tungsten target. Targets that include Molybdenum, Gold, Platinum, Silver or Copper also can be employed. Preferably, a transmissive target configuration of the X-ray source 102 is used in which the electron beam strikes the thin target 103 from its backside in some examples. The X-rays emitted from the other side of the target 103 are then used as the beam 104.

When the sample 114 is exposed to the X-ray beam 104, the X-ray photons transmitted through the sample form an attenuated X-ray beam 106 that is received by the detector system 118. In some other examples, an objective lens such as a zone plate lens is used to form an image onto the detector system 118 of the X-ray imaging system 100.

In the most common configuration of the detector system 118, a magnified projection image of the sample 114 is formed on the detector system 118 with a geometrical magnification that is equal to the inverse ratio of the source-to-sample distance and the source-to-detector distance. Generally, the geometrical magnification provided by the X-ray stage is between 2x and 100x, or more. In this case, the resolution of the X-ray image is limited by the focus spot size or virtual size of the X-ray source system 102.

To achieve high resolution, an embodiment of the X-ray micro tomography system 100 further utilizes a very high-resolution detector 124-1 of the detector system 118 in conjunction with positioning the sample 114 close to the X-ray source system 102. In one implementation of the high-resolution detector 124-1, a scintillator is used in conjunction with an optical microscope objective to provide additional magnification in a range between 2x and 100x, or more.

Other possible detectors can be included as part of the detector system 118 in the illustrated X-ray CT system 100. For example, the detector system 118 can include a lower resolution detector 124-2. This could be a flat panel detector or a detector with a lower magnification microscope objective, in examples. Configurations of one, two, or even more detectors 124 of the detector system 118 are possible.

Preferably, two or more detectors 124-1, 124-2 are mounted on a rotating turret 122 of the detector system 118, so that they can be alternately rotated into the path of the attenuated beam 106 from the sample 114.

Typically, based on operator defined parameters, the controller 210 of the computer system 200 instructs the rotation stage 110 via the control interfaces 130 to position the sample 114 and the detector 124. After completion, the controller 210 rotates the sample 114 relative to the beam 104 to perform the CT scan of the sample 114 and saving the projection data 262 to a datastore 260.

In one example, the computer system 200, or other computer, includes a graphics or other acceleration processor 220 that analyzes the X-ray projections and possibly performs the calculations necessary for tomographic reconstructions or volume datasets 264 created from the X-ray projections 262. A display device 240, connected to the computer system 200, displays information from the X-ray CT system 100. An input device 250 such as a touch screen, keyboard, and/or computer mouse enables interaction between the operator, the computer system 200, and the display device 240.

Using user interface applications executing on the computer system 200 that display their interfaces on the display device 240, in one example, the operator defines/selects CT scan or calibration parameters. These include X-ray acceleration voltage settings, and settings for defining the X-ray energy spectrum of the scan and exposure time on the X-ray source system 102. The operator also typically selects other settings such as the number of X-ray projection images to create for the sample 114, the angles to rotate the rotation stage 110.

The computer system 200, possibly with the assistance of its image processor or other coprocessor 220, accepts the image or projection information from the detector system 118 associated with each rotation angle of the sample 114. Often the image processor 220 combines the projection images using reconstruction algorithms to create 3D tomographic reconstructed volume information for the sample.

The computer system 200 will typically execute reconstruction application 254 for reconstructing a volume data set 264 of a sample from its projection data 262.

The reconstruction applications 254 runs on top of the operating system 252. The operating system 252, in turn, is executed by the computer's central processing unit(s) (CPU) 250. According to the invention an artifact removal application 256 is also provided.

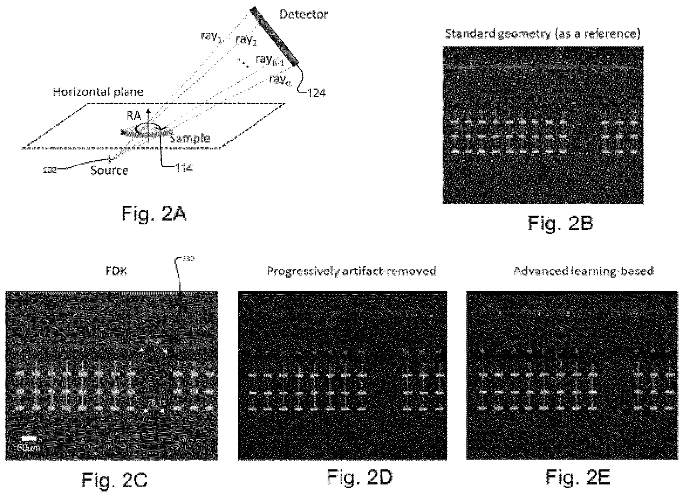

Figs. 2A-2E illustrate the problem when using a laminographic X-ray micro tomography setup.

Fig. 2A shows the basic laminographic geometry. The x-ray source 102, shown as a point source, is located underneath or on one side of a sample 114. A flat 2D detector 124 (either a direct flat-panel x-ray detector, or any indirect, photon energy conversation-based x-ray detection module) is located above the sample.

In the illustration, a few rays are shown passing through the sample, connecting the source to different pixels of the detector. These rays have non-zero take-off angles that are different from each other. In a practical system, take-off angles for these rays usually range from 10 to 30 degrees. Note that the angles can also include -10 to -30 degrees because the source can alternatively be above and detector below, yielding these negative take-off values. During signal acquisition, the sample 114 is rotated around rotation axis, RA, while signals are detected via different rays having different take-off angles.

Fig. 2B shows the reconstruction of the sample, specifically a DDR4 chip, from scans with Orlov complete geometry, as reference.

Fig. 2C shows a classic FDK reconstruction of the sample. The reconstruction shows the notorious butterfly artifacts 310 that plagues rotational laminography. These spatially varying artifacts cannot be removed by a simple deconvolution as the artifacts are different for every part of the sample as shown by the various angles marked in the figure. Also, these artifacts can stretch across the entire volume and do not respond to typical deconvolution methods.

The laminographic geometry's principal ray (a ray connecting source and center of detector) has a 20-degree take-off angle. The spatially varying oblique elongation artifacts are mainly caused by the varying ray angles distributed across the sample. Generally, such artifacts are well-known for laminographic reconstructions. They originate from the fact that a sample is under-sampled by non-parallel beams.

And, similar artifacts also arise from computed tomography from other non-Orlov complete geometries. For example, in normal cone beam tomographies, the top and bottoms of the scan are affected exactly like in laminography and exhibit similar artifacts.

Figs. 2D and 2E show reconstructions of the sample employing the principles of the present invention to reduce those spatially varying artifacts shown in Fig. 2C.

A key observation from comparing Figs. 2B and 2C to each other is that the artifacts in the reconstruction tend to have lower value than the signals and are proportional to the signal strength. The present solution often relies on assuming the highest values are signals. Then these signals are used to simulate the reconstruction artifacts and those simulated artifacts are subtracted from the original reconstruction.

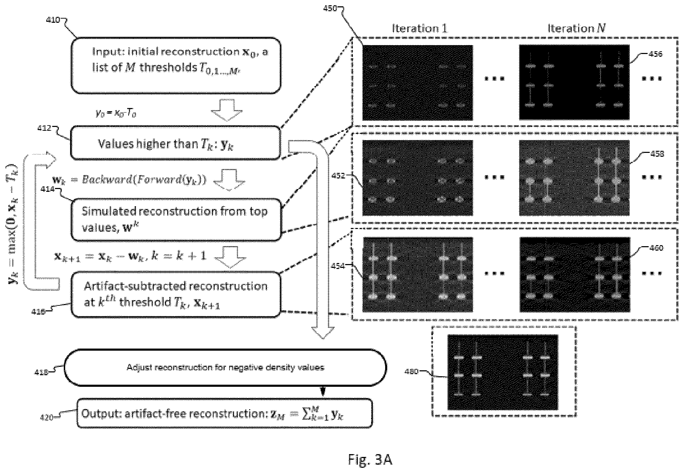

Fig. 3A is a flow diagram employing a progressive approach to artifact removal performed by the artifact removal application 256 executing on the computer system 200 according to the present invention.

An initial volumetric image $x_0$ is reconstructed in step 410 from the projection data 262 by a classic inverse solver by the computer system 200 or another computer system executing the reconstruction application 254. In the illustrated example, the inverse solver is the FDK analytical reconstruction algorithm. Other examples of other appropriate inverse solvers are Grangeat's algorithm (Grangeat, Pierre. "Mathematical framework of cone beam 3D reconstruction via the first derivative of the Radon transform." Mathematical Methods in Tomography: Proceedings of a Conference held in Oberwolfach, Germany, 5-11 June, 1990. Springer Berlin Heidelberg, 1991) and Katsevich's algorithm (Katsevich, Alexander. "Theoretically exact filtered backprojection-type inversion algorithm for spiral CT." SIAM Journal on Applied Mathematics 62.6 (2002): 2012-2026).

A list of thresholds $T_{0,1..M}$ are also defined based on the initial volumetric image $x_0$. In one example, the thresholds $T_{0,1..M}$ are selected to be evenly divided over the entire range of CT reconstruction values of the initial reconstruction, that represents the linear absorption of the sample. This division occurs into $K$ segments and stops at the $M^{th}$ threshold, with $M < K$.

Then the first or lowest threshold $T_0$ is applied to the initial volumetric image $x_0$ in step 412 by the artifact removal application 256, in the first iteration, k=0. One possible way is to uniformly choose T0, 1,..M, and in that case, if a 3D volume whose lowest value (grayscale) is "a", and highest value is "b", and T0 will be (a-b)/M. On the other hand, T0,1..M can also be chosen to be non-uniformly distributed.

On the first pass, the first thresholded volumetric image is shown in inset 450. Values above the threshold $T_k$ are kept, $y_k = \max(0, x_k - T_k)$.

The thresholded volumetric image $y_k$ is then forward projected and the forward projected images are reconstructed into a new volume in step 414 by the reconstruction application 254. When there is more confidence that $y_k$ contains signals at current threshold level, forward projection and reconstruction of a new volume 264 from its projections 262 is performed.

Inset 452 shows the simulated reconstruction from the top values. It contains tail-like reconstruction artifacts $w^k$.

Next, the volume is updated by subtracting the artifacts from the volumetric image: $x_{k+1} = x_k - w_k$. Inset 454 shows the volume after the first iteration.

The process moves to the next iteration, $k = k + 1$ and performs steps 412, 424, 416 with the new value of k and the updated value $x_{k=k+1}$.

Generally, the iteration stops after reach a predefined threshold $T_M$.

According to one embodiment, an addition step is added to address certain types of features that will otherwise not be correctly reconstructed if at all. Flat objects in the plane of the reconstruction, such as a wide copper sheet that is smooth, will not render in the reconstruction. A small aperture in this otherwise smooth layer may appear in the reconstruction as having a negative density value, an unphysical result that can be corrected as described. This is unphysical as there are no negative density materials. Step 418 addresses this problem by adjusting the construction to add a planar material layer to cancel the negative value back to zero. This would then be visualized correctly as a sheet with a hole in it.

Finally, all the signals $y_k$ are accumulated to get the final artifact-free reconstruction 480, $z_M = \sum_{k=1}^{M} y_k$ as shown in step 420. Said in another way, y_k is saved for each step k in the memory, to be summed up. By creating an auxiliary variable z_k, and during each iteration, z_k is updated with z_k + y_k and returns z_k at end. The result is shown in inset 480.

The pipeline shown in Fig. 3A was demonstrated with experimental results acquired from the same DDR4 chip. Insets 450, 452, 454, 456, 458, 460 are representative results of how $\hat{x}_m$, $z_M$, and $x_k$ to be inferenced can look like, respectively.

Artifact-free results using this method are shown in inset 480.

In addition, to accelerate this artifact-removal process, an artifact-present reconstruction is re-simulated from $z_M$, by applying forward projection, and reconstructing a volume from these projections, $\hat{x}_m$, which can be used to train a convolutional neural network (CNN), $CNN_\theta(\hat{x}_m) \rightarrow z_M$.

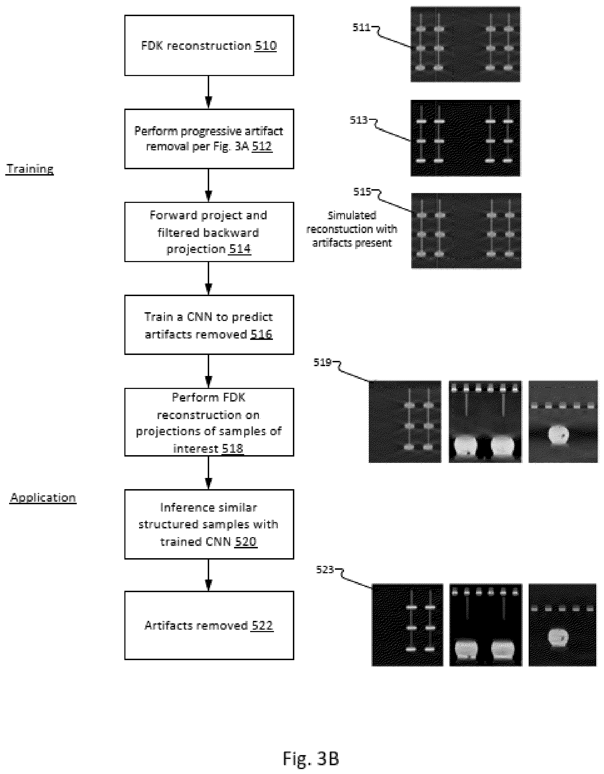

Fig. 3B is a flow diagram showing the training and use of a CNN implemented by the artifact removal application 256 executing on the computer system 200 according to the invention.

In step 510, FDK reconstructions are performed on one or several samples that will be used for training in step 510. Inset 511 shows that reconstruction.

Then in step 512, the progressive artifact removal process as described in Fig 3A is performed. This yields the removal of the artifacts as shown in inset 513.

Optionally, any negative density values resulting from the thresholding can be corrected (e.g., reset to zero or replaced with physically meaningful baselines).

Then in step 514, a forward projection is performed along with a filtered back projection.

This information is then used to train a CNN to predict the artifacts to be removed in step 516.

The trained neural network is applied on the initial reconstruction $x_0$, and get the inferenced results $CNN_\theta(x_0)$. This trained network will generalize to sample with similar structures, which can greatly reduce the time for artifact removal.

In more detail, in step 518, FDK reconstruction is performed on samples of interest. This yields reconstructions, albeit with artifacts as shown in inset 519. Then inference is performed using the CNN that was trained on similar samples in step 520. This yields to the artifact removal in step 522. Inset 523 shows the results.

It should be noted that this acceleration with deep learning is not essential, as it can additionally make the pipeline parameter free. Note that there is a stopping criterion $T_m$ that needs to be pre-selected. A learning-based method allows pre-training a network with carefully selected stopping criterion, that provides the best reconstructions, as well as including other image enhancement methods developed by us to be easily incorporated by training an end-to-end neural network.

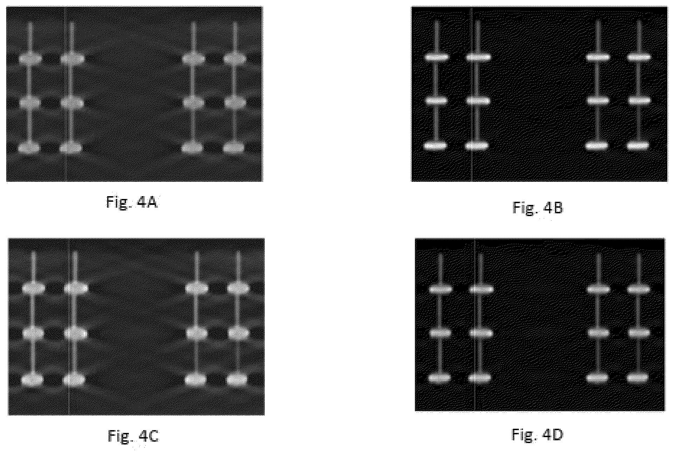

Figs. 4A-4D show different reconstructions associated with the described methods.

Fig. 4A shows a FDK reconstruction of the raw projections from the laminographic setup.

Fig. 4B shows the iteratively artifact removed reconstruction.

Fig. 4C shows the results of an FDK reconstruction for the first iteration $x_0$.

Fig. 4D shows the results of based on the advanced learning based reconstruction.

And, to reiterate, although a laminographic tomography is provided as an example, the method will work for other non-Orlov complete computed tomography in general (e.g. high cone angle, missing views).

While this invention has been particularly shown and described with references to preferred embodiments thereof, it will be understood by those skilled in the art that various changes in form and details may be made therein without departing from the scope of the invention encompassed by the appended claims.

## Claims

1. A method for reconstruction of tomographic volumes from projection data, the method comprising:

   thresholding current reconstructions to create thresholded reconstructions;
   creating simulated reconstructions from the thresholded reconstructions;
   subtracting the simulated reconstructions from the current reconstructions to create the current reconstructions for a next iteration; and
   creating final reconstructions by summing the thresholded reconstructions.

2. The method of claim 1, wherein the step of creating the final reconstructions removes spatially varying artifacts such laminographic artifacts and/or high-angle cone beam artifacts.

3. The method of either of claims 1 or 2, wherein thresholds are set based on a range of an initial reconstruction.

4. The method of any one of claims 1 to 3, wherein the current reconstructions are thresholded by zeroing values below respective thresholds.

5. The method of any one of claims 1 to 4, wherein creating the simulated reconstructions comprises forward projecting and back projecting from the thresholded reconstructions.

6. The method of any one of claims 1 to 5, further comprising assuming that the highest values of the current reconstructions are signals.

7. The method of any one of claims 1 to 6, further comprising adjusting the reconstructions for negative density values.

8. The method of claim 7, wherein adjusting the reconstructions for negative density values comprises correcting negative density values in the updated current reconstructions following the subtraction step to ensure physically meaningful density distributions.

9. The method of any one of claims 1 to 8, further comprising training a neural network based on the reconstructions.

10. The method of any one of claims 1 to 9, wherein thresholding the current reconstructions comprises selecting a plurality of threshold values based on a range of absorption values in an initial reconstruction of the projection data.

11. The method of any one of claims 1 to 10, wherein creating the simulated reconstructions comprises forward projecting the thresholded reconstructions to generate simulated projection data and back projecting the simulated projection data to form the simulated reconstructions.

12. The method of any one of claims 1 to 11, wherein the projection data is generated under a laminographic or high cone-beam imaging geometry, and the spatially varying artifacts arise due to missing views or non-Orlov-complete data acquisition

13. An X-ray micro tomography system (100) configured to execute an artifact removal application implementing the method of any one of claims 1 to 12.

14. The X-ray micro tomography system (100) of claim 13, comprising an X-ray source (102) configured to generate an X-ray beam (104);

   a rotation stage (110) configured to hold and rotate the sample (114) about a rotation axis, RA, that is angled with respect to an X-ray propagation axis such that X-rays of the X-ray beam (104) passing through the sample (114) have non-zero take-off angles that are different from each other;
   a detector (124) configured to receive the X-rays; and a processing system (200) configured to execute the artifact removal application implementing the method of any one of claims 1 to 12.

15. A computer program comprising instructions which, when the program is executed by an x-ray micro tomography system (100) of claim 13, preferably the processing system (200) of claim 14, cause the x-ray micro tomography system (100), preferably the processing system (200), to carry out the method of any one of claims 1 to 12.

Fig. 1

Fig. 2A

Standard geometry (as a reference)

Fig. 2B

FDK

Fig. 2C

Progressively artifact-removed

Fig. 2D

Advanced learning-based

Fig. 2E

Fig. 3A

Fig. 3B

Fig. 4A

Fig. 4B

Fig. 4C

Fig. 4D

Europäisches
Patentamt

European
Patent Office

Office européen
des brevets

## EUROPEAN SEARCH REPORT

**Application Number**

EP 25 15 4892

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 920 491 A (EBERHARD JEFFREY W [US] ET AL) 24 April 1990 (1990-04-24) <br> * column 1 - column 2 * <br> * column 6 * <br> * claims * | 1-15 | INV. <br> G06T11/00 |
| A | US 2004/066910 A1 (DE VILLIERS MATTIEU STEFAN [ZA]) 8 April 2004 (2004-04-08) <br> * figures * | 1-15 | |
| A | GALIGEKERE R R ET AL: "TECHNIQUES TO ALLEVIATE THE EFFECTS OF VIEW ALIASING ARTIFACTS IN COMPUTED TOMOGRAPHY", MEDICAL PHYSICS, AIP, MELVILLE, NY, US, vol. 26, no. 6, 1 June 1999 (1999-06-01), pages 896-904, XP000898643, ISSN: 0094-2405, DOI: 10.1118/1.598606 <br> * Section 4 * | 1-15 | |
| A | CRAWFORD C R ET AL: "High speed reprojection and its applications", 19880101, vol. 914, 1 January 1988 (1988-01-01), pages 311-318, XP008150353, <br> * Section II.B and II.C * | 1-15 | TECHNICAL FIELDS SEARCHED (IPC) <br><br> G06T |

The present search report has been drawn up for all claims

| Place of search | Date of completion of the search | Examiner |
|---|---|---|
| Munich | 5 May 2025 | Celik, Hasan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**EP 4 600 906 A1**

## ANNEX TO THE EUROPEAN SEARCH REPORT
## ON EUROPEAN PATENT APPLICATION NO.

EP 25 15 4892

05-05-2025

| Patent document cited in search report | | Publication date | Patent family member(s) | | Publication date |
|---|---|---|---|---|---|
| US 4920491 | A | 24-04-1990 | DE | 3915370 A1 | 30-11-1989 |
| | | | FR | 2631475 A1 | 17-11-1989 |
| | | | GB | 2220830 A | 17-01-1990 |
| | | | IT | 1235877 B | 23-11-1992 |
| | | | JP | H0250779 A | 20-02-1990 |
| | | | US | 4920491 A | 24-04-1990 |
| US 2004066910 | A1 | 08-04-2004 | EP | 1356433 A1 | 29-10-2003 |
| | | | US | 2004066910 A1 | 08-04-2004 |
| | | | WO | 02058009 A1 | 25-07-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FELDKAMP, LEE A** ; **LLOYD C. DAVIS** ; **JAMES W. KRESS.** Practical cone-beam algorithm.. *Josa a 1.6*, 1984, 612-619
- **FELDKAMP, L.A** ; **DAVIS, L.C.** ; **KRESS, J.W.** Practical Cone-Beam Algorithm.. *Journal of the Optical Society of America A*, 1984, vol. 1, 612-619
- **TUY, HEANG K**. An inversion formula for cone-beam reconstruction.. *SIAM Journal on Applied Mathematics*, 1983, vol. 43 (3), 546-552
- **ORLOV, S. S.** Theory of three-dimensional image reconstruction: I Conditions for a complete set of projections.. *Sov. Phys. Crystallogr.*, 1976, vol. 20, 312-314
- Mathematical framework of cone beam 3D reconstruction via the first derivative of the Radon transform. **GRANGEAT, PIERRE**. Mathematical Methods in Tomography: Proceedings of a Conference held in Oberwolfach, Germany. Springer Berlin Heidelberg, 05 June 1990
- **KATSEVICH, ALEXANDER**. Theoretically exact filtered backprojection-type inversion algorithm for spiral CT. *SIAM Journal on Applied Mathematics*, 2002, vol. 62 (6), 2012-2026